# EUROPÄISCHE PATENTSCHRIFT

(11) **EP 0 942 854 B1**
(45) Veröffentlichungstag und Bekanntmachung des Hinweises auf die Patenterteilung: **24.07.2002**
(21) Anmeldenummer: 98955325.0
(22) Anmeldetag: 15.09.1998
(51) Int. Cl.: B60R 21/32

(54) **ANORDNUNG ZUM ERZEUGEN EINES AUSLÖSESIGNALS FÜR EINE SICHERHEITSEINRICHTUNG IN EINEM FAHRZEUG**
SYSTEM FOR PRODUCING A RELEASE SIGNAL FOR A VEHICLE SAFETY DEVICE
DISPOSITIF POUR PRODUIRE UN SIGNAL DE DECLENCHEMENT DESTINE A UN SYSTEME DE SECURITE DANS UN VEHICULE AUTOMOBILE

(30) Priorität: 06.10.1997 DE 19744085
(43) Veröffentlichungstag der Anmeldung: 22.09.1999
(73) Patentinhaber: ROBERT BOSCH GMBH, 70442 Stuttgart (DE)
(72) Erfinder: MATTES, Bernhard, D-74343 Sachsenheim (DE); BREUNIG, Volker, D-74078 Heilbronn (DE); HENNE, Michael, D-74374 Zaberfeld (DE); GROESCH, Lothar, D-70374 Stuttgart (DE)
(86) Internationale Anmeldenummer: DE9802725
(87) Internationale Veröffentlichungsnummer: WO9917963

(56) Entgegenhaltungen:
- DE-A- 19 609 176
- DE-A- 19 609 717
- DE-C- 19 651 124

## Beschreibung

### Stand der Technik

Die vorliegende Erfindung betrifft eine Anordnung zum Erzeugen eines Auslösesignals für eine Sicherheitseinrichtung in einem Fahrzeug bei einem seitlichen Aufprall auf ein niedriges Hindernis, beispielsweise einen Bordstein. Bei einem seitlichen Aufprall eines Fahrzeugs auf einen Bordstein oder ein ähnliches niedriges Hindernis erfahren die Insassen in einem Fahrzeug eine sehr hohe seitliche Beschleunigung, so dass bereits eine Verletzungsgefahr für die Insassen besteht, bevor es zu einem Kippen oder Überrollen des Fahrzeugs kommt.

Die Offenlegungsschrift DE 196 09 176 A 1 betrifft ein Verfahren und eine Anordnung zum Erkennen eines Fahrzeugüberschlags gemäß dem Oberbegriff des Anspruchs 1. Dabei wird, wenn die Beschleunigungswerte unter einem vorgegebenen Schwellwert liegen, eine gemessene Winkelgeschwindigkeit mit einem zweiten Schwellwert verglichen, wobei bei einem Überschreiten dieses zweiten Schwellwertes ein Überrollvorgang erkannt wird.

Der Erfindung liegt daher die Aufgabe zugrunde, eine Anordnung der eingangs genannten Art anzugeben, die bei einem seitlichen Aufprall des Fahrzeugs auf ein niedriges Hindernis frühzeitig auslöst, noch bevor es überhaupt zu einem Überrollvorgang kommt.

### Vorteile der Erfindung

Die genannte Aufgabe wird mit den Merkmalen des Patentanspruchs 1 gelöst. Dabei ist ein erster Schwellenwertentscheider vorgesehen, der eine bezüglich der Längsachse des Fahrzeugs gemessene Drehrate oder eine daraus abgeleitete Größe mit einem Schwellenwert vergleicht. Ein zweiter Schwellenwertentscheider vergleicht eine in Richtung der Querachse des Fahrzeugs gemessene Beschleunigung mit einem Schwellenwert. Schaltungsmittel geben dann ein Auslösesignal für die Sicherheitseinrichtung ab, wenn beide Schwellenwertentscheider gleichzeitig eine Überschreitung ihrer Schwellenwerte signalisieren. Durch geeignete Wahl der Schwellenwerte bewirkt diese Anordnung ein sehr frühzeitiges Auslösen der Sicherheitseinrichtung, wenn das Fahrzeug seitlich gegen ein niedriges Hindernis prallt.

Eine Fehlauslösung der Sicherheitseinrichtung kann mit den Merkmalen des Unteranspruchs dadurch weitgehend ausgeschlossen werden, daß in einem weiteren parallelen Signalzweig ein dritter Schwellenwertentscheider eine in Richtung der Querachse des Fahrzeugs gemessene Beschleunigung mit einem Schwellenwert vergleicht, wobei diese Beschleunigung von einem Beschleunigungssensor gemessen wird, der für die Sensierung geringerer Beschleunigungen ausgelegt ist als ein Beschleunigungssensor für die Sensierung der dem zweiten Schwellenwertentscheider zugeführten Beschleunigung. Ein vierter Schwellenwertentscheider erfaßt die Zeitdauer, über die der Schwellenwert des dritten Schwellenwertentscheiders überschritten wird und ein Auslösesignal für die Sicherheitseinrichtung abgibt, wenn diese Zeitdauer eine vorgegebene Zeitschwelle überschreitet. Die Ausgänge der beiden Signalzweige liegen an einer Verknüpfungsschaltung an, die ein Auslösesignal nur dann an die Sicherheitseinrichtung durchschaltet, wenn beide Signalzweige gleichzeitig ein Auslösesignal liefern.

### Beschreibung eines Ausführungsbeispiels

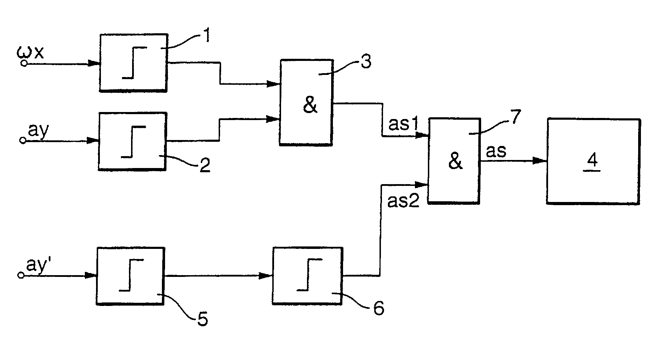

Anhand eines in der Zeichnung dargestellten Ausführungsbeispiels wird nachfolgend die Erfindung näher erläutert.

Die einzige Figur der Zeichnung zeigt ein Blockschaltbild einer Schaltung, die ein Auslösesignal für eine Sicherheitseinrichtung erzeugt, wenn das Fahrzeug seitlich auf ein niedriges Hindernis prallt.

Diese Schaltung besitzt zwei Signalzweige. Im ersten Signalzweig befinden sich zwei Schwellenwertentscheider 1 und 2. Der erste Schwellenwertentscheider 1 vergleicht die von einem Drehratensensor um die Längsachse x des Fahrzeugs gemessene Drehrate ωx oder eine daraus abgeleitete Größe (z.B. einen Winkel) mit einem empirisch ermittelten Schwellenwert. Der zweite Schwellwertentscheider vergleicht eine von einem Beschleunigungssensor in Richtung der Querachse y des Fahrzeugs gemessene Beschleunigung ay mit einem empirisch ermittelten Schwellenwert. Jeder der beiden Schwellenwertentscheider 1, 2 gibt ein Ausgangssignal an ein UND-Gatter 3 ab, wenn in ihm die vorgegebene Schwelle überschritten worden ist. Wenn in beiden Schwellenwertentscheidern 1 und 2 gleichzeitig die vorgegebene Schwelle für die Drehrate ωx und die Beschleunigung ay überschritten worden ist, dann gibt das UND-Gatter 3 an seinem Ausgang ein Auslösesignal as1 für die Sicherheitseinrichtung 4 ab.

Damit es nicht zu einer Fehlauslösung durch Störungen der Sensoren oder von Schaltungsteilen in dem ersten Signalzweig kommt, ist ein zweiter paralleler Signalzweig vorgesehen mit einem dritten und einem vierten Schwellenwertentscheider 5, 6. Der dritte Schwellenwertentscheider 5 vergleicht ein in Richtung der Querachse y des Fahrzeugs gemessene Beschleunigung ay' mit einem vorgegebenen, empirisch ermittelten Schwellenwert, wobei diese Beschleunigung ay' von einem Beschleunigungssensor gemessen wird, der für die Sensierung geringerer Beschleunigungen (bis zu 3g) ausgelegt ist als ein Beschleunigungssensor für die Sensierung der Beschleunigung (größer als 10 g), die dem zweiten Schwellenwertentscheider 2 im ersten Signalzweig zugeführt wird.

Überschreitet die gemessene Beschleunigung ay' im dritten Schwellenwertentscheider 5 die vorgegebene Schwelle, so erfaßt der nachfolgende vierte Schwellenwertentscheider 6 die Zeitdauer, über die die Schwelle im dritten Schwellenwertentscheider 5 von der gemessenen Beschleunigung ay' überschritten wird. Der vierte Schwellenwertentscheider 6 gibt dann ein Auslösesignal as2 für die Sicherheitseinrichtung 4 ab, wenn diese Zeitdauer eine vorgegebene Zeitschwelle überschreitet.

Das Ausgangssignal as1 des UND-Gatters 3 des ersten Signalzweiges und das Augangssignal as2 des zweiten Signalzweiges sind einem weiteren UND-Gatter 7 zugeführt. Dieses UND-Gatter 7 schaltet nur dann ein Auslösesignal as an die Sicherheitseinrichtung 4 durch, wenn beide Signalzweige gleichzeitig ein Auslösesignal as1, as2 liefern.

Bei einem seitlichen Aufprall der Räder eines Fahrzeugs auf einen Bordstein treten relativ hohe laterale Beschleunigungen auf, die eine rasche Insassenverlagerung zur Seite hin bewirken. Dadurch, daß das Hauptauslösekriterium - Beschleunigung ay in Richtung der Querachse y - zusätzlich noch mit der Drehrate ωx verknüpft wird, kann mit großer Sicherheit festgestellt werden, ob ein Überrollvorgang droht. In einem solchen Fall muß ein Auslösen der Sicherheitseinrichtung schon dann erfolgen, wenn das Fahrzeug erst einen Drehwinkel von 10° erreicht hat. Bei Fahrzeugdrehungen, die auf andere Einflüsse als auf einen seitlichen Aufprall auf ein niedriges Hindernis (Bordstein) zurückzuführen sind, darf bei so einem geringen Drehwinkel von 10° noch längst keine Auslösung einer Sicherheitseinrichtung erfolgen. Insofern ist es sinnvoll, ein vorangehend beschriebenes Sensorsystem ausschließlich für die Erkennung eines seitlichen Aufpralls auf ein niedriges Hindernis vorzusehen. Bei der Wahl der Schwellen für ωx, ay und ay' ist die seitliche Insassenbewegung zu berücksichtigen. Es muß die Sicherheitseinrichtung so rechtzeitig ausgelöst werden, daß z. B. eine Gurtstraffung noch einen Effekt hat; d.h. der Insasse darf noch nicht aus dem Gurt herausgerutscht sein . Generell darf sich der Insasse noch nicht zu weit seitlich bewegt haben.

## Patentansprüche

1. Anordnung zum Erzeugen eines Auslösesignals für eine Sicherheitseinrichtung in einem Fahrzeug bei einem seitlichen Aufprall auf ein niedriges Hindernis - z.B. Bordstein -, wobei ein erster Schwellenwertentscheider (1) eine bezüglich der Längsachse des Fahrzeugs gemessene Drehrate oder eine daraus abgeleitete Größe mit einem Schwellenwert vergleicht, und ein zweiter Schwellenwertentscheider (2) eine in Richtung der Querachse des Fahrzeugs gemessene Beschleunigung mit einem Schwellenwert vergleicht, **dadurch gekennzeichnet, daß** Schaltungsmittel (3) vorgesehen sind die, wenn beide Schwellenwertentscheider (1, 2) gleichzeitig eine Überschreitung ihrer Schwellenwerte signalisieren, ein Auslösesignal (as1) für die Sicherheitseinrichtung (4) abgeben.

2. Anordnung nach Anspruch 1, **dadurch gekennzeichnet,**
- **daß** in einem weiteren parallelen Signalzweig ein dritter Schwellenwertentscheider (5) eine in Richtung der Querachse des Fahrzeugs gemessene Beschleunigung mit einem Schwellenwert vergleicht, wobei diese Beschleunigung von einem Beschleunigungssensor gemessen wird, der für die Sensierung geringerer Beschleunigungen ausgelegt ist als ein Beschleunigungssensor für die Sensierung der dem zweiten Schwellenwertentscheider zugeführten Beschleunigung
- **daß** ein vierter Schwellenwertentscheider (6) die Zeitdauer erfaßt, über die der Schwellenwert des dritten Schwellenwertentscheiders (5) überschritten wird, und ein Auslösesignal (as2) für die Sicherheitseinrichtung (4) abgibt, wenn diese Zeitdauer eine vorgegebene Zeitschwelle überschreitet,
- und **daß** die Ausgänge der beiden Signalzweige an einer verknüpfungsschaltung (7) anliegen, die ein Auslösesignal (as) nur dann an die Sicherheitseinrichtung (4) durchschaltet, wenn beide Signalzweige gleichzeitig ein Auslösesignal (as1, as2) liefern.

## Claims

1. Arrangement for generating a triggering signal for a safety device in a vehicle in the case of a side impact against a low obstacle, for example kerb, a first threshold value decision element (1) comparing a rate of rotation measured in terms of the longitudinal axis of the vehicle or a variable derived therefrom with a threshold value and a second threshold value decision element (2) comparing an acceleration measured in the direction of the transverse axis of the vehicle with a threshold value, **characterized in that** circuit means (3) are provided which output a triggering signal (as1) for the safety device (4) if both threshold value decision elements (1, 2) simultaneously signal that their threshold values are exceeded.

2. Arrangement according to Claim 1, **characterized**
- **in that** in a further parallel signal branch a third threshold value decision element (5) compares an acceleration measured in the direction of the transverse axis of the vehicle with a threshold value, this acceleration being measured by an acceleration sensor which is configured for sensing lower accelerations than an acceleration sensor for sensing the acceleration fed to the second threshold value decision element,
- **in that** a fourth threshold value decision element (6) senses the time period over which the threshold value of the third threshold value decision element (5) is exceeded, and outputs a triggering signal (as2) for the safety device (4) if this time period exceeds a predefined time threshold.
- and **in that** the outputs of the two signal branches are applied to a logic linking circuit (7) which connects through a triggering signal (as) to the safety device (4) only if both signal branches simultaneously supply a triggering signal (as1, as2).

## Revendications

1. Dispositif pour générer un signal de déclenchement dans une installation de sécurité équipant un véhicule en cas de choc latéral sur un obstacle bas tel qu'une bordure,
selon lequel un premier moyen de décision à seuil (1) compare une vitesse de rotation mesurée par rapport à l'axe longitudinal du véhicule ou une grandeur qui en est déduite à un seuil et un second moyen de décision à seuil (2) compare une accélération mesurée dans la direction de l'axe transversal du véhicule à un seuil,
**caractérisé par**
des moyens de commutation (3) qui, lorsque les deux moyens de décision à seuil (1, 2) signalent simultanément un dépassement de leur seuil, émettent un signal de déclenchement (as1) pour l'installation de sécurité (4).

2. Dispositif pour générer un signal de déclenchement dans une installation de sécurité selon la revendication 1,
**caractérisé en ce que**
dans une autre branche de signal, en parallèle, il est prévu un troisième moyen de décision à seuil (5) qui compare une accélération mesurée dans la direction de l'axe transversal du véhicule à un seuil, cette accélération étant mesurée par un capteur d'accélération conçu pour détecter des accélérations plus faibles qu'un capteur d'accélération détectant l'accélération fournie au second moyen de décision à seuil,
un quatrième moyen de décision à seuil (6) détecte la durée pendant laquelle le seuil a été dépassé dans le troisième moyen de décision à seuil (5) et génère un signal de déclenchement (as2) pour l'installation de sécurité (4) si cette durée dépasse un seuil de temps donné,
et les sorties des deux branches de signal sont appliquées à un circuit de combinaison (7) qui ne transmet un signal de déclenchement (as) à l'installation de sécurité (4) que si les deux branches de signal fournissent simultanément un signal de déclenchement (as1, as2).
